# EUROPEAN PATENT SPECIFICATION

(11) **EP 3 051 538 B1**
(45) Date of publication and mention of the grant of the patent: **14.06.2017**
(21) Application number: 15152696.9
(22) Date of filing: 27.01.2015
(51) Int. Cl.: H01B 3/44, H01B 13/06, H01B 7/295

(54) **Method for producing an insulation material**
Verfahren zur Herstellung eines Isolationsmaterials
Procédé de production d'un matériau isolant

(43) Date of publication of application: 03.08.2016
(73) Proprietor: Lapp Engineering & Co., 6330 Cham (CH)
(72) Inventor: Hauck, Manfred, CH-6314 Unterägeri (CH); Gohs, Uwe, D-01129 Dresden (DE); Thakur, Varun, CH-6330 Cham (CH)
(74) Representative: Rutz & Partner

(56) References cited:
- EP-A1- 2 522 694
- WO-A1-2010/121960
- DATABASE WPI Week 201430 Thomson Scientific, London, GB; AN 2014-D50752 XP002741269, & CN 103 467 866 A (JINGFENG GROUP CO LTD) 25 December 2013 (2013-12-25)
- DATABASE WPI Week 201519 Thomson Scientific, London, GB; AN 2015-15680S XP002741270, & CN 104 292 639 A (UNIV QINGHUA) 21 January 2015 (2015-01-21)

## Description

The present invention relates to a method for preparing an insulation material and to the use the prepared material for manufacturing a cable, such as an electrical cable.

A variety of polymers have been utilized for the development of a cable insulation material. Typical polymeric materials include thermoplastics like polyvinyl chloride (PVC), polypropylene (PP), polyethylene (PE) and elastomers like (EPM) rubber, ethylene propylene diene monomer (EPDM) rubber, and ethylene vinyl acetate rubber (EVA).

But, upon crosslinking, polymers like PE, EPDM and EVA can not be reprocessed. Thus, there is a requirement to develop polymer compounds which can be reprocessed again and again without much loss in physical and chemical properties.

WO 2010/110559 discloses an uncrosslinked linear medium-density polyethylene resin composition for a power cable, which is applicable to an insulating layer, a semi-conducting layer or a sheath layer.

Several crosslinking techniques have been utilized for the crosslinking of polymers, e.g. sulfur crosslinking, peroxide crosslinking, moisture crosslinking, and silane crosslinking. The sulfur crosslinking system involves the use of carcinogenic accelerators and activators. The peroxide crosslinking system leads to discoloration of the compound owing to the generation of acetophenone type of chemicals. Moisture and silane crosslinking have also been utilized in different polymer systems.

US 2003/0134969 discloses compositions comprising at least one liquid unsaturated organosilane, at least one free-radical generator, an optional crosslinking catalyst, a thermoplastic base polymer and a reinforcing, extending, or flame-retardant mineral filler provide moisture-crosslinked, filled cable compounds having superior properties compared to conventional compounds. Such crosslinking techniques often lead to local crosslinking of the compound, owing to inefficient mixing of lots of crosslinking ingredients.

EP 2 421 916 discloses a process for the production of a compounded thermoplastic polymer material in which materials made of at least two different polymers. Said polymers are exposed in molten state under dynamic mixing conditions to irradiation.

In order to fulfil the requirements of an insulation material for the later production of cables, said insulation material must comprise a high loading of a mineral filler material as flame retardant material. Unfortunately, said mineral filler material negatively influences the mechanical and electrical properties of the insulation material.

The problem of the present invention is to provide a polymeric insulation material which is cost-effective as well as reprocessable and has excellent flame resistance properties. Particularly, a method shall be defined that allows efficient preparation of such a polymeric insulation material at reduced cost.

More particularly, the insulation material prepared with the inventive method shall have improved mechanical properties with regard to the amount of mineral filler material applied. Further, the use of the improved polymeric material for manufacturing an insulation layer or sheath of a cable and a cable comprising the improved polymeric material shall be defined.

The problem is solved by a method for preparing an insulation material according to claim 1, the use of the prepared insulation material according to claim 12 and to a cable comprising said insulation material according to claim 13. Further preferred embodiments are subject of the dependent claims.

The method of the present invention relates to the preparation of an insulation material for cables and involves three steps.

In a first step,
- 15 to 40% by weight of the total weight of the total composition of at least one polyproplyene resin and
- 15 to 40% by weight of the total weight of the total composition of a polyolefin copolymer rubber
are mixed together. The mixing takes place at a temperature at which the polymers are in the molten state, preferably between 5 and 30 °C above the melting temperature of the polymer in the composition having the highest melting temperature. That is, if one polymer has for example a melting temperature of 150°C and the other polymer has for example a melting temperature of 170° the mixing of the polymers takes place at a temperature between 175°C and 200°C. Therefore, the polymers are all in a molten state resulting in a homogenous mixture of the at least two polymers.

In a second step, preferably after 1 to 5 minutes, most preferably after 2 to 3 minutes, 40 to 70% by weight of the total weight of the composition of a mineral filler material is added to the mixture obtained in the first step and homogenized by further melt mixing the obtained composition. The temperature in the second step is preferably essentially the same as in the first step, in order to keep the polymers in molten state.

In a third step, the composition obtained in the second step is treated with high energy electrons while mixing resulting in the desired insulation material. In this reaction step the temperature is essentially the same as in the first step. The chemical reaction between the polymers and the mineral filler material are induced by spatial and temporal precise energy input via high energy electrons under dynamic conditions of melt mixing. Therefore, the penetration depth of electrons is limited to a part of mixing volume. The total mixing volume is modified due to the change of polymer mass within the penetration depth of elections during mixing process. Due to said electron induced reactive processing the insulation material according to the present invention may be reprocessed which is highly wanted.

Surprisingly, despite the extremely high loading of mineral filler material, the insulation material obtained by the process according to the present invention has excellent mechanical and electrical properties. Due to the addition of the mineral filler material in a separate second step, that is, into the molten polymer composition, the composition can be homogenized and graft-links are formed between the mineral filler material and the polymers. In addition, the insulation material fulfills the oil resistance requirement according to UL 758:60 due to the generation of graft-links between the polyolefin copolymer rubber and the filler material. Furthermore, the combination of such a partial covalent network, graft-links between all constituents of the material as well as physical entanglement with the polymer matrix of the polypropylene resin results in an insulation material which can be reprocessed and fulfills the hot set test. In addition, the insulation material obtained by the process according to the present invention shows excellent good electrical and mechanical properties, oil resistance, thermal stability, flame resistance and weathering resistance.

In addition, the process of the present invention allows the production of an insulation material in a very short production time and therefore at low costs. Since the insulation material can still flow after carrying out the grafting and partial cross-linking process, it is possible to further process it. On top, there is no need to add further cross-linking agents, which could further react at higher temperatures, which in turn increases the long-term stability of the final product.

Preferably, the total amount of the mineral filler material is added in the second step in two to five portions. This allows a good control of the temperature, since the shear forces can be reduced and therefore, a loss of water from the mineral filler material can be avoided, which in turn increases the flame resistance of the insulation material. In addition, essentially no degradation of the polypropylene resin can be observed which positively influences the mechanical properties of the final product.

In a preferred embodiment the mineral filler material is added in two portions and the first portion of the mineral filler material comprises 15 to 45% by weight of the filler material. That is, the first portion of the mineral filler material is added preferably after 1 to 5 minutes mixing the polymers according to step a), most preferably after 2 to 3 minutes and ideally after about 2 minutes, and the second portion of the material preferably 20 to 120 seconds, preferably 30 to 80 seconds and ideally 30 seconds after the first portion of the mineral filler. Such a procedure allows both, an excellent temperature control and a fast production process as well.

The process according to the present invention can be carried out for example in a Brabender Plasticorder mixer, but of course other suitable devices known to a person skilled in the art are also possible.

As mentioned above, during the third step, the homogenized composition obtained in the second step is treated with high energy electrons while mixing resulting in the desired insulation material. The polymers in the homogenized composition are in a molten state and are continuously melt mixed, typically with a rotor speed of 40 rpm to 100 rpm, preferably 55 rpm to 75 rpm and ideally 60rpm and at a friction ratio of 1 to 2, preferably 1.5. Due to the continuous mixing of the homogenized composition, the cross-linking of the polymers is very efficient. The electron treatment is preferably carried out in a nitrogen atmosphere. The nitrogen atmosphere reduces the thermal degradation of the polypropylene rubber.

Preferably, electron treatment time in the third step of the process according to the present invention is 20 to 200 seconds, preferably 100 to 200 seconds, which results in an insulation material having preferably a tensile strength of more than 10 MPa, preferably more than 15 MPa, and an elongation at break of more than 150%.

Preferably the absorbed dose at fixed electron energy of about 0.3MeV to 1.5MeV, preferably 0.6 MeV, of high energy electrons is between 5 and 40 kGy, preferably between 10 and 30 kGy, most preferably between 15 and 25 kGy. Surprisingly, such a low dose of electrons results in an insulation material having good mechanical properties, in particular a good tensile strength and elongation at break.

The dose rate is typically between 0.1 and 0.25 kGy/s, preferably between 1.15 and 0.2 kGy/s, and most preferably 0.18 kGy/s.

The expression polypropylene resin stands for a known thermoplastic polymer, and methods of its production have been well described in the literature. Molecular weight, molecular structure, melting temperature, density and melt flow index are parameters which are typically used to describe polypropylene resins. For reasons of cost and convenience, it is preferred to use commercially available isotactic polypropylene homopolymer in the process according to the present invention. Very good results could be obtained with a polypropylene homopolymer (HP501N) having a melt flow index between 1.5 and 3 grams per 10 minutes, preferably 2 grams per 10 minutes (ISO 1133) and a density of 0.9 g/cm³.

The expression polyolefin copolymer rubber stands for copolymers comprising polyolefin monomer units of another polymer, which may be a polyolefin or not. Examples of polyolefin rubbers according to the present invention are for example EPM, i.e. ethylene propylene methyl rubber, EPDM, i.e. ethylene propylene diene monomer, EPR, i.e. an ethylene propylene rubber, or a natural rubber, alpha-olefins, polyethylene copolymers, acrylate copolymers of polyethylene, vinyl acetate copolymers of polyethylene or a mixture thereof.

In a preferred embodiment the polyolefin copolymer rubber is EPDM. The ethylene content of the EPDM is preferably between 45% and 75%, most preferably between 50 and 55%. Optimal results could be obtained with an EPDM having an ethylene content of 51%. The diene content of EPDM is between 2.5 and 12% by weight, preferably 6 to 9% by weight, most preferably 7.7% by weight.

Especially good results could be obtained with an EPDM rubber having a diene content of 7.7% by weight, an ethylene content of 51% by weight, a density of 0.86 g/cm3 and a Mooney viscosity (ML1+4 at 125°C) of 60 (such as Buna EP G 6850 supplied by Lanxess).

The expression mineral filler material stands for modified and unmodified mineral filler material having flame retardant properties.

Unmodified mineral filler materials are for example magnesium dihydroxide and aluminum trihydrate or a mixture thereof.

Modified mineral filler materials are filler materials which are at least partly, preferably fully coated with a coating having reactive groups. Preferably the reactive groups are selected from the group consisting of an acidic group (such as fatty acids), a precursor of an acidic group, an unsaturated group, an acrylate group and a silane group (such as a vinyl silane group, an amino silane group, trimethoxy vinyl silane, triethoxy vinyl silane, vinyl tris (2-methoxy ethoxy) silane and acryloxy methacryloxy silanes). Most preferably the reactive group is a vinyl silane or an acrylate, most preferably a vinyl silane.

Preferably the mineral filler material is a mixture of unmodified mineral filler material and modified filler material. Such a mixture results in a good integration of the mineral filler material in the polymer matrix, but allows still the production of an inexpensive product. Most preferably the mineral filler material comprises 70 to 90% of the unmodified filler material and 10 to 30% by weight of the modified filler material.

However, it is also possible to produce an insulation material having excellent flame retardant properties in absence of such a modified mineral filler material.

In another embodiment of the present invention the mineral filler material comprises 90% to 100% of the modified mineral filler material. Although it is more expensive, it results in an excellent insulation material.

Preferably, the unmodified mineral filler material is selected from the group consisting of aluminum nitride, aluminum oxide, aluminum trihydrate, barium titanate, beryllium oxide, boron nitride, carbon fibers, diamond, graphite, magnesium hydroxide, magnesium oxide, metal particulate, silicon carbide, tungsten carbide, zinc oxide, phosphorus ester amides, phosphoric acid amides, phosphonic acid amides, phosphinic acid amides, ammonium polyphosphate and melamine and melamine derivatives, including melamine polyphosphate, melamine pyrophosphate and melamine cyanurate and a combination thereof.

A preferred modified mineral filler material is a vinyl silane coated magnesium hydroxide such as Magnifin H-10A supplied by Albermarle.

Another preferred modified mineral filler material is LDH (layered double hydroxide). LDH has typically a specific surface area of 8.0 to 12.0 m² (g, preferably 9.0 to 11.0 m²/g, and a particle size of d10µm of 0.3 to 50, d50µm of 0.65 to 0.95 and d90µm of 1.4 to 1.8.

Unmodified mineral filler materials such as magnesium dihydroxide and aluminum trihydrate have a particle size d10µn of 0.35 to 0.70, d50µm of 0.8 to 1.1 and d90µm of 1.4 and 2.4 and a specific surface area of 4.0 to 11 m²/g. Good result could be obtained with a magnesium dihydroxide having a particle size of d10µm of 0.35 to 0.55, d50µm of 0.8 to 1.1 and d90µm of 1.4 to 2.4 and a specific surface rea of 7.0 to 9.0 m²/g (such as Magnifin H-7 supplied by Albe Marle).

Best results could be obtained with a composition comprising 20% by weight of a polypropylene homopolymer, 20% by weight of EPDM and 60% by weight of a vinyl silane coated magnesium hydroxide.

Together with the mineral filler material or at a later stage, but before treating the composition with high electron energy, further additives such as antioxidants, ultraviolet absorbers, plasticizers and colorants depending on the applications and costumer needs may be added.

The insulation material obtained by the process according to the present invention may be used as a base material for preparing a cable or a covering layer with electrical insulation properties. The insulator may take the form of a single layer or several layers (multilayer) of the insulation material, preferably two, three or more layers.

The insulation material obtained by the process according to the present invention may be used for cables in general, preferably power cables, especially for cables in photo voltaic systems and wind turbines as well as in those applications, where oil and flame resistance is required along with excellent mechanical properties such as automobiles cables and machinery.

In a further embodiment of the present invention it is also possible to produce a semi-conducting shield from the insulation material obtained by the process according to the present invention. In order to produce a semi-conducting shield it is necessary to incorporate conductive particles into the insulation material. These conductive particles are generally provided by carbon black.

### Examples

### Example 1: Electron-induced reactive processing (according to the invention)

An insulation material consisting of polypropylene homopolymer (20 wt.-%), ethylene propylene diene rubber (20 wt.-%), and magnesium dihydroxide (H10A; 60 wt.-%) is produced by electron induced reactive processing in a Brabender mixing chamber under following conditions:

| | |
|---|---|
| Non-reactive processing time [minutes] | : 6 |
| Average processing temperature [°C] | : 190 |
| Rotor speed [rpm] | : 60 |
| Electron energy [MeV] | : 0,6 |
| Reactive mixing time [s] | : 100s |
| Absorbed dose [kGy] | : 18 |
| Dose rate [kGy/s] | : 0.18 |
| Gas atmosphere | : nitrogen |

First, the polypropylene homopolymer and the ethylene propylene diene rubber are mixed together. Second, the magnesium dihydroxide is added in two portions with 40wt.-% being added in a first step and 20wt.-% added 30s later in a second step, whereby the first portion is added after about 2 minutes to the polymer mixture.

Mechanical performance of material (according to EN ISO 4589_1:1999 and DIN EN ISO 4589_2:1999 and DIN EN ISO 527-2):

| | |
|---|---|
| - Elongation at break [%] | : 162 |
| - Tensile strength [MPa] | : 15,8 |
| - LOI (limiting oxygen index) | : 30 |

### Example 2: State of the art (comparative example)

An insulation material consisting of polypropylene homopolymer (20 wt.-%), ethylene propylene diene rubber (20 wt.-%), and magnesium dihydroxide (H10A; 60 wt.-%) is produced in a Brabender mixing chamber under following conditions:

| | |
|---|---|
| Non-reactive processing time [minutes] | : 6 |
| Average processing temperature [°C] | : 190 |
| Rotor speed [rpm] | : 60 |
| Electron energy [MeV] | : 0,6 |
| Absorbed dose (applied after non-reactive processing) [kGy] | : 18 |
| Gas atmosphere | : nitrogen |

Mechanical performance of material (according to EN ISO 4589_1:1999 and DIN EN ISO 4589_2:1999 and DIN EN ISO 527-2):

| | |
|---|---|
| - Elongation at break [%] | : 75 |
| - Tensile strength [MPa] | : 12.1 |
| - LOI | : 30 |

The polypropylene homopolymer, the ethylene propylene diene rubber and the magnesium dihydroxide are directly mixed together.

### Example 3: Electron-induced reactive processing (according to the invention)

Insulation material consisting of polypropylene homopolymer (20 wt.-%), ethylene propylene diene rubber (20 wt.-%), and magnesium dihydroxide (H10A; 60 wt.-%) is produced by electron induced reactive processing in a Brabender mixing chamber under following conditions:

| | |
|---|---|
| Non-reactive processing time [minutes] | : 6 |
| Average processing temperature [°C] | : 190 |
| Rotor speed [rpm] | : 60 |
| Electron energy [MeV] | : 0,6 |
| Reactive mixing time [s] | : 140s |
| Absorbed dose [kGy] | : 25 |
| Dose rate [kGy/s] | : 0.18 |
| Gas atmosphere | : nitrogen |

First, the polypropylene homopolymer and the ethylene propylene diene rubber are mixed together. Second, the magnesium dihydroxide is added in two portions with 40wt.-% being added in a first step (after about two minutes) and 20wt.-% added 30s later in a second step.

Mechanical performance of material (according to EN ISO 4589_1:1999 and DIN EN ISO 4589_2:1999 and DIN EN ISO 527-2):

| | |
|---|---|
| - Elongation at break [%] | : 301 |
| - Tensile strength [MPa] | : 16.9 |
| - LOI | : 30 |

Examples 1 and 3 show superior materials properties (elongation at break and tensile strength) as compared to the same material processed according to the state of the art (example 2).

## Claims

1. Method for preparing an insulation material for cables by
a) mixing
i. 15 to 40% by weight of at least one polypropylene resin,
ii. 15 to 40% by weight of at least one polyolefin copolymer rubber,
at a temperature being between 5 and 30 °C above the melting temperature of the polymer in the composition having the highest melting temperature,
b) adding 40 to 70% by weight of a mineral filler material to the mixture obtained in step a) and homogenizing the obtained composition,
c) treating the composition obtained in step b) with high energy electrons while mixing.

2. Method according to claim 1, wherein in step b) the total amount of the mineral filler material is added in two to five portions.

3. Method according to claim 2, wherein in step b) the first portion of the mineral filler material comprises 15 to 45% by weight of the filler material.

4. Method according to any of the preceding claims, wherein the electron treatment time is 20 to 200 seconds, preferably 100 to 200 seconds.

5. Method according to any of the preceding claims, wherein the absorbed electron dose is 5 to 40 kGy, preferably 10 to 30 Gy, most preferably 15 to 25 Gy.

6. Method according to any of the preceding claims, wherein polymer A is polypropylene homopolymer.

7. Method according to any of the preceding claims, wherein polymer B is ethylene propylene diene rubber (EPDM).

8. Method according to any of the preceding claims, wherein the mineral filler material is selected from the group consisting of aluminum nitride, aluminum oxide, aluminum trihydrate, barium titanate, beryllium oxide, boron nitride, carbon fibers, diamond, graphite, magnesium hydroxide, magnesium oxide, metal particulate, silicon carbide, tungsten carbide, zinc oxide, phosphorus ester amides, phosphoric acid amides, phosphonic acid amides, phosphinic acid amides, and melamine and melamine derivatives, including melamine polyphosphate, melamine pyrophosphate and melamine cyanurate and a combination thereof.

9. Method according to any of the preceding claims, wherein the mineral filler material is coated.

10. Method according to claim 9, wherein the coating of the mineral filler material comprises a functional group selected from the group consisting an acidic group, a precursor of an acidic group, an unsaturated group and a silane group.

11. Method according to any of the preceding claims wherein the mineral filler material comprises a layered double hydroxide (LDH), a vinyl silane coated magnesium hydroxide or a mixture thereof.

12. Use of an insulation material obtained by the method according to claims 1 to 11 as an insulation material for a cable.

13. Cable comprising an insulation material, preferably at least one sheath layer consisting of an insulation material prepared according to one of the claims 1 to 11.

## Patentansprüche

1. Verfahren zur Herstellung eines Isolationsmaterials für Kabel mit dem
a) Mischen von
i. 15 bis 40% Gewichtsprozenten von zumindest einem Polypropylenharz,
ii. 15 bis 40% Gewichtsprozenten von zumindest einem Polyolefin-Copolymer-Gummi,
bei einer Temperatur von zwischen 5 und 30°C über dem Schmelzpunkt desjenigen Polymers in der Zusammensetzung, welches die höchste Schmelztemperatur aufweist,
b) Hinzufügen von 40 bis 70% Gewichtsprozenten eines mineralischen Füllmaterials zur im Schritt a) erhaltenen Mischung und Homogenisierung der erhaltenen Zusammensetzung,
c) Behandlung der im Schritt b) erhaltenen Zusammensetzung mit hochenergetischen Elektronen während des Mischens.

2. Verfahren nach Anspruch 1, wobei während dem Schritt b) die Gesamtmenge an mineralischem Füllmaterial in zwei bis fünf Portionen zugegeben wird.

3. Verfahren nach Anspruch 2, wobei die erste Portion des während dem Schritt b) zugefügten Füllmaterials 15 bis 45% Gewichtsprozente des Füllmaterials ausmacht.

4. Verfahren nach einem der vorangehenden Ansprüche, wobei die Zeitdauer der Elektronenbehandlung zwischen 20 und 200 Sekunden, vorzugsweise zwischen 100 und 200 Sekunden, liegt.

5. Verfahren nach einem der vorangehenden Ansprüche, wobei die absorbierte Elektronendosis zwischen 5 und 40 kGy, vorzugsweise 10 zwischen 30 Gy, weiter bevorzugt zwischen 15 und 25 Gy, liegt.

6. Verfahren nach einem der vorangehenden Ansprüche, wobei Polymer A ein Polypropylen Homopolymer ist.

7. Verfahren nach einem der vorangehenden Ansprüche, wobei Polymer B ein Ethylen-Propylen-Dien-Kautschuk (EPDM) ist.

8. Verfahren nach einem der vorangehenden Ansprüche, wobei das Füllmaterial ausgewählt ist aus der Gruppe der Aluminiumnitride, Aluminiumoxide, Aluminiumtrihydrate, Bariumtitanate, Berylliumoxide, Boronnitride, Karbonfasern, Diamant, Graphit, Magnesiumhydroxide, Magnesiumoxide, Metallpartikel, Silikonkarbide, Wolframkarbide, Zinkoxid, Phosphor-Ester-Amide, Phosphor-Säure-Amide, Phosphonat-Säure-Amide, Phosphin-Säure-Amide, Melamin und Melamin-Derivate, inklusive Melamin-Polyphosphate, Melamin-Pyrophosphate und Melamine-Cyanurate und Kombinationen davon.

9. Verfahren nach einem der vorangehenden Ansprüche, wobei das Füllmaterial beschichtet ist.

10. Verfahren nach Anspruch 9, wobei die Beschichtung des Füllmaterials eine funktionale Gruppe, ausgewählt aus der Gruppe umfassend Säure-Gruppen, Vorprodukte einer Säure-Gruppe, einer ungesättigten Gruppe und Silan-Gruppen, aufweist.

11. Verfahren nach einem der vorangehenden Ansprüche, wobei das mineralische Füllmaterial ein geschichtetes doppel-Hydroxid (LDH), ein mit einem vinyl-Silan beschichtetes Magnesium-Hydroxid oder eine Mischung davon, umfasst.

12. Verwendung eines mit einem Verfahren nach einem der Ansprüche 1 bis 11 gefertigten Isolationsmaterials als Kabelmaterial.

13. Kabel umfassend ein Isolationsmaterial, vorzugsweise zumindest eine Mantelschicht bestehend aus einem Isolationsmaterial, welches mit einem Verfahren nach einem der Ansprüche 1 bis 11 gefertigt wurde.

## Revendications

1. Procédé de préparation d'un matériau isolant pour câbles par
a) mélange
i. 15 à 40% en poids d'au moins une résine de polypropylène,
ii. 15 à 40% en poids d'au moins un copolymère de polyoléfine-caoutchouc,
à une température comprise entre 5 et 30 ° C au-dessus de la température de fusion du polymère dans le mélange ayant la température de fusion la plus élevée,
b) ajouter 40 à 70% en poids d'un matériau de remplissage minérale au mélange obtenu dans l'étape a) et homogénéisation de la composition obtenue,
c) traiter la composition obtenue dans l'étape b) avec des électrons à haute énergie pendant le processus de mélange.

2. Procédé selon la revendication 1, dans lequel, dans l'étape b), la quantité totale du matériau de remplissage minérale étant ajoutée en deux à cinq portions.

3. Procédé selon la revendication 2, dans lequel, dans l'étape b), la première partie du matériau de remplissage comprend 15 à 45% en poids du matériau de remplissage.

4. Procédé selon l'une quelconque des revendications précédentes, dans lequel le temps de traitement d'électrons étant de 20 à 200 secondes, de préférence de 100 à 200 secondes.

5. Procédé selon l'une quelconque des revendications précédentes, dans lequel la dose d'électrons absorbée est de 5 à 40 kGy, de préférence de 10 à 30 Gy, plus préférée de 15 à 25 Gy.

6. Procédé selon l'une quelconque des revendications précédentes, dans lequel le polymère A étant un homopolymère de polypropylène.

7. Procédé selon l'une quelconque des revendications précédentes, dans lequel le polymère B étant un caoutchouc d'éthylène propylène diène (EPDM).

8. Procédé selon l'une quelconque des revendications précédentes, dans lequel le matériau de remplissage minéral est choisi dans le groupe constitué par le nitrure d'aluminium, l'oxyde d'aluminium, le trihydrate d'aluminium, le titanate de baryum, l'oxyde de béryllium, le nitrure de bore, les fibres de carbone, le diamant, le graphite, l'hydroxyde de magnésium, le magnésium L'oxyde, les particules de métal, le carbure de silicium, le carbure de tungstène, l'oxyde de zinc, les amides d'ester de phosphore, les amides d'acide phosphorique, les amides d'acide phosphonique, les amides d'acide phosphinique et les dérivés de mélamine et de mélamine, y compris le polyphosphate de mélamine, le pyrophosphate de mélamine et le cyanurate de mélamine et une combinaison de ceux-ci.

9. Procédé selon l'une quelconque des revendications précédentes, dans lequel la matière de charge minérale est revêtue.

10. Procédé selon la revendication 9, dans lequel le revêtement du matériau de remplissage minéral comprend un groupe fonctionnel choisi dans le groupe consistant en un groupe acide, un précurseur d'un groupe acide, d'un groupe insaturé et d'un groupe silane.

11. Procédé selon l'une quelconque des revendications précédentes, dans lequel le matériau de remplissage minéral comprend un hydroxyde double (LDH) stratifiée, un hydroxyde de magnésium revêtu de vinyl silane ou un mélange de ceux-ci.

12. Utilisation d'un matériau isolant obtenu par le procédé selon une des revendications 1 à 11 en tant que matériau isolant pour un câble.

13. Câble comprenant un matériau isolant, de préférence au moins une couche de gaine constituée d'un matériau isolant préparé selon l'une des revendications 1 à 11.
